# EUROPÄISCHE PATENTANMELDUNG

(11) **EP 1 591 429 A1**
(43) Veröffentlichungstag der Anmeldung: **02.11.2005**
(21) Anmeldenummer: 05405250.1
(22) Anmeldetag: 18.03.2005
(51) Int. Cl.: C04B 35/80, C04B 35/565

(54) **Schaumkeramikmaterial mit offenen Poren und runden Hohlräumen und Verfahren zu dessen Herstellung**

(30) Priorität: 19.04.2004 CH 675042004
(71) Anmelder: Erbicol SA, 6828 Balerna (CH)
(72) Erfinder: Ortona, Alberto, 6932 Lugano-Breganzona (CH)
(74) Vertreter: Gaggini, Carlo

(57) **Zusammenfassung**

Die vorliegenden Erfindung betrifft ein Schaumkeramikmaterial mit offenen Poren von hoher mechanischer Widerstandskraft für poröse Brenner, dadurch gekennzeichnet, dass die Struktur des Schaumkeramikmaterials aus einem Knäuel von wirr durcheinander laufenden keramischen Fäden mit im Wesentlichen rundem Querschnitt besteht. Die Fäden sind in Verbindungspunkten untereinander verbunden, so dass sie eine starre aber poröse Struktur bilden.

Das Herstellverfahren unterscheidet sich von jenem, das gemäss dem Stand der Technik bekannt ist - entsprechend der Schweizer Patentanmeldung CH1266/02 - dadurch, dass die Vorlage, mit der das erfindungsgemässe Schaumkeramikmaterial erzeugt wird, aus einem Knäuel wirr durcheinander liegender Fäden aus Kunststoff (Polyethylen, Polyester, Polyamid, Polypropylen) mit im Wesentlichen rundem Querschnitt besteht.

Die Vorteile des neuen Schaumkeramikmaterials sind unter anderem darin zu sehen, dass der Porositätsgrad des Schaumkeramikmaterials frei gewählt werden kann, und dass röhrenförmige Gegenstände daraus gebildet werden können, die für verschiedene Verwendungszwecke ideal geeignet sind, und dass ein Schaumkeramikmaterial resultiert, das grössere Widerstandsfähigkeit gegen mechanische und thermische Beanspruchung aufweist.

## Beschreibung

Die vorliegende Erfindung betrifft ein Schaumkeramikmaterial mit offenen Poren mit runden Hohlräumen, von hoher mechanischer Widerstandsfähigkeit für poröse Brenner gemäss dem Oberbegriff des Anspruchs 1, und ein Verfahren zur Herstellung eines Schaumkeramikmaterials dieser Art gemäss dem Oberbegriff des abhängigen Anspruchs 5. Solches Schaumkeramikmaterial wird verwendet für Filter grösserer Dicke, Tragkörper für Filtrierung, Wärmetauscher, Regeneratoren, elektrisch heizbare Thermostaten, Katalysatorträger, Brennerelemente für Oberflächenstrahler-Brenner und volumetrische Brenner, Hochtemperatur-Reaktionskammern und ähnliche Anwendungen.

### Stand der Technik

Die offenporigen Schaumkeramikmaterialien für die obengenannten Anwendungszwecke sind gemäss dem Stand der Technik gut bekannt, ebenso wie auch die Grundprinzipien der entsprechenden Herstellverfahren.

Insbesondere sind sowohl die Schaumkeramikmaterialien selbst als auch in entsprechendes Herstellverfahren erschöpfend dargestellt in der Europäischen Patentanmeldung mit Anmeldedatum 9.7.03 unter der Anmeldungsnummer 03405514.5 (Veröffentlichungsnummer 182590), entsprechend der Schweizer Prioritätsanmeldung vom 19.7.2000 unter der Nummer CH 1266/02.

Die genannte Schweizer Patentanmeldung wird im Folgenden als "vorangehende Patentanmeldung" (CH1266/02) bezeichnet, und deren Inhalt in seiner Gesamtheit ist integrierender Bestandteil der vorliegenden Patentanmeldung.

In der Beschreibung des Standes der Technik in der vorangehenden Patentanmeldung sind die bis anhin bekannten Schaumkeramiktypen im Detail beschrieben sowie die entsprechenden Herstellverfahren und die Probleme bei der Verwendung und bei der Herstellung solcher Schaumkeramikmaterialien.

Eine der hauptsächlichen Eigenheiten der bekannten Herstellverfahren für Schaumkeramikmaterialien, die auch die gesamte Struktur der gewonnenen Schaumkeramikmaterialien beeinflussen und auch deren Verwendung beschränken, war jene, dass man bei der Herstellung von einem handelsüblichen Polymerschaum ausging, der aufgeschäumt und anschliessend polymerisiert wurde, und dessen geschlossene Poren aufgebrochen wurden. Dieser Schaumstoff - in seiner Struktur ähnlich wie ein Schwamm - wurde anschliessend mit einer Suspension keramischer Partikel und Wasser oder Lösungsmittel imprägniert. Das nach diesem Verfahren hergestellte offenporige Schaumkeramikmaterial ist eine Kopie (Abdruck) der Struktur des Polymer-schaumstoffs des Ausgangsmaterials. Das nach den Erkenntnissen der vorangehenden Patentanmeldung hergestellte Schaumkeramikmaterial ergibt unvermeidlich die Ausbildung von Verbindungsbrücken von im Wesentlichen dreieckigem Querschnitt, welche die Struktur des Schaumkeramikmaterials darstellen, die in ihren Verbindungszonen zwischen zwei konvexen Wänden tiefe Risse bildet, die in Punkten enden, deren Krümmungsradien im Wesentlichen den Wert Null aufweisen. Die negative Wirkung der Ausbildung solcher Risse aufzuheben ist genau das Ziel der vorangehende Patentanmeldung (CH1266/02), indem die Risse innen mit einem Film aus Kohlenstoff und Siliziumkarbid SiC aufgefüllt werden, so dass sich zwischen den beiden benachbarten Wänden eine ausgerundete Verbindungszone bildet. Ohne näher auf die detaillierten Erklärungen eingehen zu wollen - für welche auf die erschöpfende Einleitung der vorangehenden Patentanmeldung verwiesen sei - soll zum besseren Verständnis der vorliegenden Erfindung ein Punkt präzisiert werden, der den bekannten Schaumkeramikmaterialien noch innewohnenden Nachteilen zugrunde liegt, welche dank der vorliegenden Erfindung überwunden werden sollen.

Die in den bekannten Herstellverfahren hauptsächlich verwendeten Schaumstoffe werden durch Aufschäumen eines Polymers (Polyurethan, PVC, Polyester) hergestellt. Das Aufschäumen des als Vorlage dienenden Schaums ergibt einen Schaumstoff mit geschlossenen Poren. Zum Erzeugen eines offenporigen Schaumstoffs wird der Schaum einer Behandlung unterzogen, durch welche die dünnen Membranen, welche die Bläschen trennen, aufgeschmolzen und mittels Druckwellen nach und nach aufgebrochen werden. Die dicksten Teile bestimmen die Brücken, welche die Schaumstoffstruktur zusammenhalten. Diese Herstelltechnik erzeugt Brücken, deren Querschnitt sternförmig mit scharf auslaufenden Kanten ausgebildet ist. Diese Brücken bestimmen nach dem Imprägnieren mit der Aufschlämmung und den nachfolgenden thermischen Behandlungen sternförmige Hohlräume mit scharfen Kanten.

Wegen des Infiltrationsprozesses ist es ferner auch nicht möglich, in der Gegend der Brücken aus Kunststoff eine gleichmässig dicke Schicht der Aufschlämmung zu erreichen. Dies trägt zusätzlich dazu, dass die resultierende Keramik-Struktur zerbrechlich ist.

Die vorliegende Erfindung setzt sich zum Ziel, eine andere Unterlage für die Aufschlämmung zu verwenden, die durch zufällige Anordnung eines Kunststofffadens erstellt wird. Das Produkt wird damit porös, aber sobald es mit der Aufschlämmung imprägniert und Pyrolyse-behandelt ist, weist es einen runden Hohlraum auf.

Die Ziele der vorliegenden Erfindung sind hauptsächlich das Überwinden der Nachteile, die den nach der vorangehenden Patentanmeldung hergestellten Schaumkeramikmaterialien noch anhaften, was bedeutet, eine gegen Thermoschock noch widerstandsfähigere Struktur des Schaumkeramikmaterials zu schaffen, das dank des merklich grösseren Durchmessers der Poren gegen-' über dem mit dem bekannten Herstellverfahren erreichbaren Durchmesser grössere Porosität aufweist sowie der Möglichkeit, Teile aus Schaumkeramikmaterial beliebiger Form herstellen zu können und vollständige Kontrolle über die Porosität des resultierenden Schaumkeramikmaterials dank Beeinflussung der Dichte des als Ausgangsmaterial verwendeten Polymer-Schaumstoffs zu erreichen.

Alle diese Zielsetzungen erfüllt ein Schaumkeramikmaterials, das die Eigenschaften gemäss dem kennzeichnenden Teil des Anspruchs 1 aufweist, nämlich dass die Struktur des Schaumkeramikmaterials aus einem Knäuel von wirr durcheinander laufenden Keramikfäden besteht, deren Querschnitt im wesentlichen kreisrund ist, und in deren Berührungspunkten untereinander verbunden sind, wodurch eine starre, aber poröse Struktur gebildet wird.

Zum Herstellverfahren solcher Schaumkeramikmaterialien ist zu bemerken, dass dieses in fast allen Bearbeitungsphasen gleich ist wie jenes gemäss der vorangehenden Patentanmeldung, sich aber in der Anfangsphase unterscheidet, in der vorgesehen ist, dass für das Erstellen der Vorlage für das künftige Schaumkeramikmaterial ein wirrer Knäuel von Kunststofffäden (beispielsweise aus Polyethylen, Polyester, Polypropylen, usw.) mit im Wesentlichen kreisrundem Querschnitt verwendet wird, von der Art wie sie in der Praxis beispielsweise bei der Herstellung von Filtermaterialien für Absaughauben oder ähnliche Anwendungen verwendet werden.

Das Ausgangmaterial ist also ein in verschiedenen Form marktgängiges Produkt (Faserfeinheit, Kräuselung oder Texturierung), das erlaubt, eine Schichtung ineinander verflochtenen Fasern von genau definierter Geometrie und Porosität bereitzustellen, das sich direkt in den verlangten Eigenschaften des damit hergestellten Schaumkeramikmaterials wiederspiegelt. Das damit hergestellte Schaumkeramikmaterial reproduziert genau die Eigenschaften des als Ausgangsmaterial verwendeten Fasermaterials, ohne jedoch die dem Schaumkeramikmaterial der vorangehenden Generation noch innewohnenden Nachteile aufzuweisen.

Die vorliegende Erfindung ist im Folgenden unter Bezugnahme auf einige Ausführungsbeispiele für das Schaumkeramikmaterial und das Verfahren zu seiner Herstellung sowie auf die entsprechenden Abbildungen näher beschrieben. Diese zeigen in der:
- Fig. 1: eine schematische Darstellung zur Erläuterung des Aufbaus eines Schaumkeramikmaterials mit Fäden gemäss der vorliegenden Erfindung als rohrförmiger Körper,
- Fig. 2: Die Phase des Aufbaus einer Schichtung von Fasern um einen Kern zur Ausbildung eines rohrförmigen Teils aus Schaumkeramikmaterial entsprechend der Fig. 1,
- Fig. 3: Ein Querschnitt einer keramischen Brücke eines gemäss dem Stand der Technik hergestellten Schaumkeramikmaterials, wie - insbesondere - in der vorangehende Patentanmeldung (CH1266/02) dargestellt, welche den typischen sternförmigen Hohlraum zeigt,
- Fig. 4: Ein Querschnitt einer keramischen Brücke eines gemäss der vorliegenden Erfindung hergestellten Schaumkeramikmaterials mit rundem Hohlraum,
- Fig. 5: Die sternförmige Struktur eines Schaumkeramikmaterials gemäss dem Stand der Technik in schematischer Darstellung, welche die Dickenunterschiede zwischen dem mittleren Teil der Brücke und einem Verbindungspunkt verschiedener Brücken, welche die Struktur bilden,
- Fig. 6: Die Struktur eines Schaumkeramikmaterials gemäss der vorliegenden Erfindung in schematischer Darstellung, die zeigt, wie diese überall im Wesentlichen den gleichen Querschnitt aufweist,
- Fig. 7: Eine schematische Darstellung eines rohrförmigen Teils aus herkömmlichem Schaumkeramikmaterial, d.h. gemäss der vorangehenden Patentanmeldung (CH1266/02), der einen hohen Temperaturgradienten zwischen der Innenseite und der Aussenseite aufweist,
- Fig. 8: Eine schematische Darstellung eines rohrförmigen Teils aus erfindungsgemässem Schaumkeramikmaterial gemäss der vorliegenden Erfindung, welche zeigt, dass der Temperaturgradient zwischen der Innenseite und der Aussenseite viel weniger ausgeprägt ist als im Fall des herkömmlichen Schaumkeramikmaterials gemäss der Fig. 7,
- Fig. 9: Ein (stark) vergrössertes Foto eines herkömmlichen Schaumkeramikmaterials, d.h. gemäss der vorangehenden Patentanmeldung (CH1266/02),
- Fig. 10: Ein (stark) vergrössertes Foto eines Schaumkeramikmaterials gemäss der vorliegenden Erfindung.

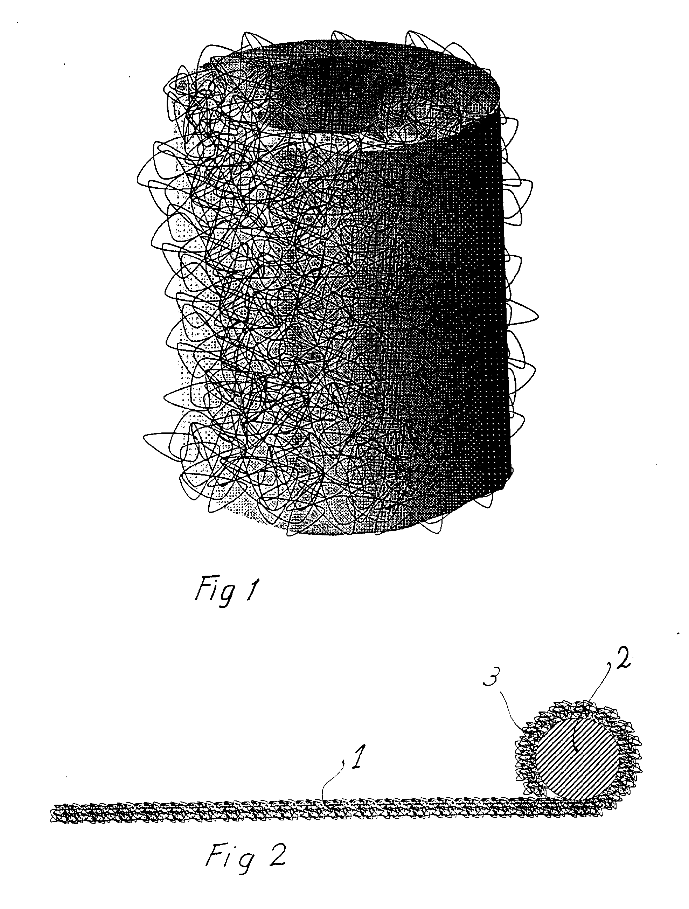

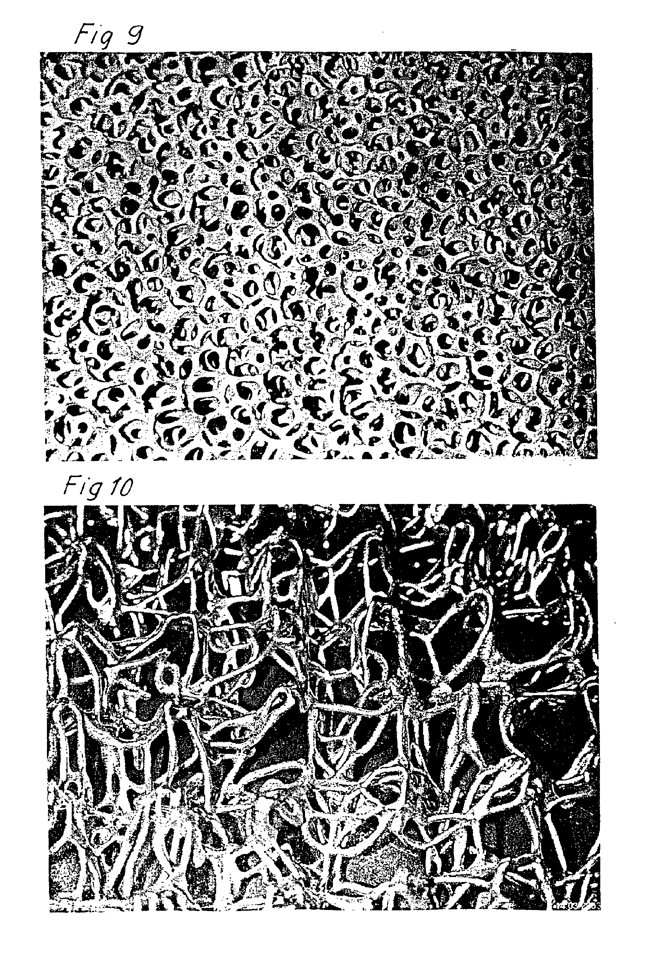

In der Fig. 1 ist die Struktur eines Schaumkeramikmaterials mit offenen Poren gemäss der vorliegenden Erfindung schematisch dargestellt: Sie zeigt, wie diese aus einem Knäuel von keramischen Fäden besteht, die wirr durcheinander gekreuzt sind, wobei die Fäden einen im Wesentlichen kreisrunden Querschnitt aufweisen - wie jene, die das Ausgangsmaterial für die Herstellung bildeten, und die textile Fäden mit mehr oder weniger feinemTiter waren, die durch Extrudieren einer plastischen Masse durch eine Lochplatte (Düsenplatte) gewonnen wurden. Die Fäden, welche das erfindungsgemässe Schaumkeramikmaterial bilden, sind untereinander an Verbindungspunkten in solcher Weise verbunden, dass sie eine starre, aber poröse Struktur bilden. In der Fig. 10 ist in starker Vergrösserung ein Schaumkeramikmaterial gemäss der vorliegenden Erfindung dargestellt und jenem gemäss der Fig. 9 gegenübergestellt, die ein Foto eines herkömmlichen Schaumkeramikmaterials zeigt, d.h. hergestellt gemäss den Erkenntnissen der vorangehende Patentanmeldung (CH1266/02). Aus den Fotografien geht das viel "faserigere" und offenere Aussehen des erfindungsgemässen Schaumkeramikmaterials klar hervor, in welchem die Verbindungspunkte - d.h. die Stellen, an welchen die fadenförmigen Brücken durch "Verschmelzen" untereinander verbunden sind, - ohne Verdickungen zu zeigen. In der Fig. 9 hingegen lässt sich sofort feststellen, dass die Porenstruktur des Schaumkeramikmaterials viel weniger offen ist als die in der Fig. 10 gezeigte; dies hauptsächlich die Verbindungspunkte der Brücken, welche die Struktur bilden, - vor allem Brücken von dreieckigem Querschnitt, wie im Folgenden dargelegt wird - viel mehr verbreitert sind, so dass sie "Verbindungssterne" bilden, welche Nachteile aufweisen, die weiter unten erläutert werden.

Vereinfacht ausgedrückt sind die Verbindungspunkte zwischen den filamentartigen Brücken des Schaumkeramikmaterials gemäss der vorliegenden Erfindung "röhrenförmige Brücken" - um zu unterstreichen, dass diese überall die gleiche Querschnittsform aufweisen - während die Verbindungspunkte in herkömmlichem Schaumkeramikmaterial "sternförmige Brücken" sind, d.h. solche, deren Querschnitt sich gegen den mittleren Teil zwischen zwei Verbindungspunkten hin verringert.

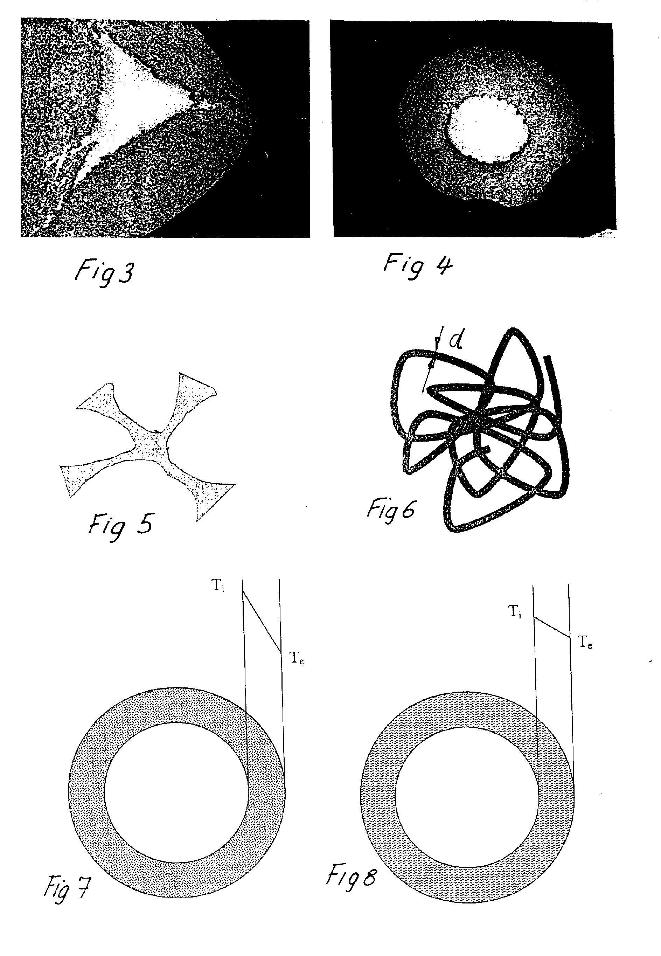

In den Figuren 5 und 6 ist der Unterschied zwischen den "sternförmigen Brücken" des herkömmlichen Schaumkeramikmaterials (Fig. 5) und den "röhrenförmigen Brücken" einer Struktur eines erfindungsgemässen Schaumkeramikmaterials aufgezeigt.

Der wesentliche Unterschied zwischen den beiden Arten von Schaumkeramikmaterial - jenem gemäss der vorliegenden Erfindung und jenem gemäss der vorangehenden Patentanmeldung (CH1266/02) - besteht vorab in der Form dieser Verbindungspunkte, denn die praktische Anwendung hat ergeben, dass das Schaumkeramikmaterial mit Brücken von annähernd konstantem Querschnitt im Vergleich zu jenem, in welchem der Querschnitt der Brücken in ihrem mittleren Teil wesentlich kleiner und umgekehrt gegen die Verbindungspunkte hin viel grösser ist, eine grössere Widerstandsfähigkeit gegen Thermoschock aufweisen, was bedeutet, dass sie bei gleichen Betriebsbedingungen unter dem Einfluss thermischer Schwankungen, denen solche Körper ausgesetzt sind, weniger zu Bruch gehen, wenn sie zur Realisierung von Brennern oder ähnlichen Elementen verwendet werden. Darüber hinaus werden diese Eigenschaften in speziellen Anwendungen für poröse Brenner lebenswichtig, sowohl dank dem Erreichen gewisser thermodynamischer Eigenschaften der Verbrennung, als auch dank der erhöhten Widerstandskraft gegen Thermoschock, und dank der Verfügbarkeit von anderen als ebenen geometrischen Ausbildungen, beispielsweise röhrenförmige Geometrien, wo solche Thermoschocks infolge von Temperaturdifferenzen zwischen Innenseite und Aussenseite wesentlich sind.

In den Figuren 7 und 8 ist zu diesem Zweck in absolut schematischer Form dargestellt, welcher Unterschied in der praktischen Anwendung zwischen röhrenförmigen Brennerkörpern feststellbar ist, wobei der eine (in der Fig. 7) herkömmlicher Art ist, während der andere (in der Fig. 8) den Erkenntnissen der vorliegenden Erfindung entspricht. Dank den Eigenschaften des neuen "fadenförmigen" Schaumkeramikmaterials mit offeneren Poren lässt sich feststellen, dass der thermische Temperaturgradient (Differenz der Temperatur zwischen der Innenseite und der Aussenseite des Rohrs) in dem in der Fig. 8 gezeigten Fall kleiner ist als im Fall, der in der Fig. 7 dargestellt ist. Da der thermische Gradient immer mit den Spannungen einhergeht, die in einem Körper auftreten, ist es offensichtlich vorteilhaft, möglichst kleine thermische Gradienten zu erreichen. Dies deutet daher auf die Überlegenheit der "fadenförmigen" Schaumkeramikmaterials gemäss der vorliegenden Erfindung hin, im Vergleich zum herkömmlichen Material gemäss dem Stand der Technik.

In einer bevorzugten Ausführungsform der vorliegenden Erfindung ist vorgesehen, dass der Durchmesser (d) der keramischen Fäden (siehe Fig. 6) zwischen 0,1 und 1 mm und vorzugsweise zwischen 0.3 und 0.6 mm liegt. Dabei handelt es sich um relativ dicke Fäden für textile Anwendungen, die jedoch in der Herstellung von Filtern für Absaughauben, usw., verwendet werden. Dies bedeutet, dass für die Herstellung des Schaumkeramikmaterials gemäss der vorliegenden Erfindung als plastisches Ausgangsmaterial Fäden beachtlicher Dicke Verwendung finden.

Das Verfahren zur Herstellung des erfindungsgemässen Schaumkeramikmaterials, wie es im Anspruch 5 beansprucht wird, gleich verläuft wie dasjenige gemäss dem Stand der Technik, aber mit dem - jedoch wichtigen - Unterschied, dass die Vorbereitung des Abbildes des künftigen Schaumkeramikmaterials von einem wirren Knäuel von Kunststofffäden ausgeht (in den Figuren 1 und 2 gezeigt), deren Querschnitt im Wesentlichen rund ist, und der sodann mit einer Suspension von keramischen Partikeln in Wasser oder Lösungsmittel imprägniert wird, worauf die überschüssige Suspension entfernt wird und die eingebrachte Suspension getrocknet wird. Die weiteren Bearbeitungsschritte bei der Herstellung sind genau gleich wie jene, die gemäss dem Stand der Technik bzw. der vorangehenden Patentanmeldung (CH1266/02) bekannt sind, so dass zu deren Erklärung auf dieses Dokument verwiesen sei. Festzuhalten bleibt, dass das gemäss diesem Herstellverfahren erzeugte Schaumkeramikmaterial die fadenförmige Struktur der aus den ursprünglichen Kunststofffäden erstellte Vorlage aufweist, und dass somit alle Vorteile erreicht werden können, die weiter oben für ein solchermassen aufgebautes Schaumkeramikmaterial dargelegt worden sind.

Gemäss einer bevorzugten Ausgestaltung des Herstellverfahrens ist vorgesehen, dass die Herstellphase A) auch eine Verdichtungs-Operation des Knäuels von Kunststofffasern umfassen kann, damit die Struktur mehr oder wenig kompakt ausfällt, womit schon von dieser Phase an der Porositätsgrad des resultierenden Schaumkeramikmaterials festgelegt werden kann.

Diese Verdichtungs-Operation lässt sich anhand der Fig.2 besser verständlich machen, in welcher eine Schichtung 1 von Fäden auf einen Kern 2 gewickelt wird, so dass ein zylindrischer Körper 3 von im Wesentlichen rohrartiger Form entsteht, wie dies in der Fig. 1 schematisch gezeigt ist. Durch mehr oder weniger starkes Verdichten der Schichtung von ineinander verknäuelten Kunststofffäden 1 kann von der ersten Herstellphase an die Kompaktheit der Schichtung (bzw. deren Dichte) festgelegt werden, das heisst, dass die Porosität des Endproduktes (Schaumkeramikmaterial) beeinflusst werden kann, das am Ende des Herstellverfahrens resultiert. Diese Möglichkeit, die Anfangsvorlage zu verdichten, welche die Struktur der wirr durcheinander liegenden Fäden in der Schichtung 1 bietet, erlaubt also das Erzeugen von neuartigen Schaumkeramikmaterialien mit der für den vorgesehenen Anwendungszweck günstigsten Porosität.

Die Ansprüche 7 bis 9 betreffen Eigenschaften des Herstellverfahrens gemäss dem Anspruch 5, die an sich gemäss dem Stand der Technik bekannt, jedoch in Kombination mit den neuen Eigenschaften des erfindungsgemässen Herstellverfahrens neu sind. Für die damit erreichbaren Vorteile sei daher auf die vorangehende Patentanmeldung (CH1266/02) verwiesen.

Für die vorliegende Erfindung ist hingegen die Eigenheit wesentlich, dass gemäss einer bevorzugten Ausführungsform die Kunststofffäden, welche die Struktur des künftigen Schaumkeramikmaterials bilden, aus Polyethylen, Polyester, Polyamid oder Polypropylen bestehen, also aus Materialien, die normalerweise zur Herstellung von textilen Geweben bzw. Flächengebilden und ähnlichen Produkten verwendet werden.

Schliesslich sei festgestellt, dass die vorliegende Erfindung die Herstellung von Schaumkeramikmaterialien für die in der Einleitung erwähnten Anwendungszwecke erlaubt, deren folgende Eigenschaften vorteilhaft sind und optimale Anwendung in der Realisierung von Wärmetauschern, Katalysator-Trägern, Strahlungs-Brennern, Brennkammern, usw., grosser Leistung erlauben:
- Möglichkeit, die Porosität des Schaumkeramikmaterials in der Vorbereitungsphase der Herstellung einzustellen,
- Bildung von röhrenförmigen Brücken - anstelle von sternförmigen - welche bessere Widerstandsfähigkeit gegen mechanische Beanspruchungen und gegen Thermoschock aufweisen,
- Brücken mit gleichbleibender Dicke längs der ganzen Brücke, was somit homogenere mechanische Eigenschaften sicherstellt,
- konstante Dicke im Querschnitt der Brücken,
- generell besserer Schutz des Schaumkeramikmaterials vor Oxydation dank konstanter Dicke der Verstärkungen und dank des Fehlens von geschwächten Bereichen im Schaumkeramikmaterial,
- bessere Absicherung der Qualität des Endproduktes, da dieses in der (sehr heiklen) Vorbereitungs-Zwischenstufe viel widerstandsfähiger wird gegen die Bildung von Mikrorissen (man vergleiche zu diesem Zweck die Figuren 3 und 4), deren negative Einflüsse erst beim Gebrauch des Schaumkeramikmaterials in Erscheinung treten. Diese Mikrorisse - die besonders vorkommen, wenn der Querschnitt der Brücken dreieckig ausgebildet ist, wie dies bei den konventionell gemäss dem Stand der Technik erzeugten Brücken der Fall ist -sind während des Herstellprozesses des Schaumkeramikmaterials nur schwer zu erkennen,
- die runde Form des Hohlraums der Brücken im erfindungsgemässen Schaumkeramikmaterial, wie sie in der Fig. 4 dargestellt ist, dient als Ablenkung gegen die Ausbreitung allfälliger Risse, die sich in mit Silizium gefüllten Hohlräumen bilden könnten,
- schnelleres Aufheizen dank der kleineren Wärmekapazität infolge der grösseren Porosität des gemäss der vorliegenden Erfindung hergestellten Schaumkeramikmaterials (man vergleiche die Figuren 7 und 8),
- dank rundem Querschnitt der Verbindungspunkte resultiert eine höhere Widerstandsfähigkeit gegen Thermoschock mit entsprechender Abnahme der durch Temperaturunterschiede zwischen Innenseite und Aussenseite des röhrenförmigen Körpers aus Schaumkeramikmaterial verursachten Brüche.

## Patentansprüche

1. Schaumkeramikmaterial mit offenen Poren von erhöhter Widerstandsfähigkeit gegen mechanische Beanspruchungen für poröse Brenner,
**dadurch gekennzeichnet, dass**
die Struktur des Schaumkeramikmaterials aus einem wirr angeordneten Knäuel durcheinander laufender Fäden aus Keramikmaterial von im Wesentlichen rundem Querschnitt besteht, die an Verbindungspunkten untereinander verbunden eine starre aber poröse Struktur bilden.

2. Schaumkeramikmaterial gemäss dem Anspruch 1,
**dadurch gekennzeichnet, dass**
die Verbindungspunkte röhrenförmige Brücken bilden, die über den ganzen Abschnitt gleichmässige Dicke haben und daher über ihre ganze Länge homogene mechanische Eigenschaften aufweisen.

3. Schaumkeramikmaterial gemäss dem Anspruch 1,
**dadurch gekennzeichnet, dass**
die Brücken im Schaumkeramikmaterial keine Unterschiede im Querschnitt aufweiden.

4. Schaumkeramikmaterial gemäss dem Anspruch 1,
**dadurch gekennzeichnet, dass**
der Durchmesser des Keramikfadens zwischen 0.1 und 1 mm und vorzugsweise zwischen 0.3 und 0.6 mm liegt

5. Herstellverfahren für ein Schaumkeramikmaterial mit offenen Poren bestehend aus einem Knäuel wirr durcheinander laufender keramischer Fasern von im Wesentlichen rundem Querschnitt, die in Verbindungspunkten untereinander verbunden sind, so dass sie eine starre Struktur gemäss dem Anspruch 1 bilden,
**dadurch gekennzeichnet, dass**
das Verfahren die folgenden Herstellungs-Schritte umfasst:
A) Vorbereiten einer Vorlage für das künftige Schaumkeramikmaterial bestehend aus einem wirren Knäuel durcheinander laufender Fäden aus Kunststoff mit im Wesentlichen rundem Querschnitt, Imprägnieren der Vorlage in einer Suspension von keramischen Partikeln in Wasser oder Lösungsmittel, Entfernen der überschüssigen Suspension und Trocknen der eingebrachten Suspension,
B) Pyrolyse der vorbereiteten Vorlage in inerter Atmosphäre,
C)Auskleiden der Verbindungs-Brücken, sowohl innen als aussen, des erhaltenen Schaumkeramikmaterials mit einer Polymerlösung niedriger Viskosität und deren Polymerisation bei tiefer Temperatur, damit das Polymer in die spitzen tiefen Spalten eindringt und diese vollständig ausfüllt und an diesen Stellen eine abgerundete Verbindungszone zwischen den beiden benachbarten konvexen Wänden bildet.
D) Pyrolyse des Schaumkeramikmaterials in inerter Atmosphäre, wodurch das Polymer der Auskleidung in einen dünnen porösen Kohlenstofffilm umgewandelt wird.
E) Thermische Behandlung des Schaumkeramikmaterials bei hoher Temperatur zur Infiltration von metallischem Silizium, das mit dem Kohlenstoff des im vorangehenden Verfahrensschritt gebildeten dünnen Films reagiert und eine Schicht Siliziumkarbid bildet, was ausgeführt wird indem das Schaumkeramikmaterial in einem Ofen mit Spänen von metallischem Silizium in Berührung gebracht und der Ofen unter Vakuum auf etwa 1600°C aufgeheizt wird.

6. Herstellverfahren gemäss dem Anspruch 5,
**dadurch gekennzeichnet, dass**
der Verfahrensschritt A) auch einen Verdichtungsprozess für den Knäuel von Kunststofffasern umfasst, mittels welchem die Struktur mehr oder weniger kompakt gemacht wird, womit der Porositätsgrad des resultierenden Schaumkeramikmaterials schon bei diesem Verfahrensschritt festgelegt wird.

7. Herstellverfahren gemäss dem Anspruch 5,
**dadurch gekennzeichnet, dass**
die Vorbereitung der Vorlage durch Bilden einer Schichtung (1) von wirr durcheinanderliegenden endlosen Kunststofffasern und Aufwickeln dieser Schichtung zu einem im Wesentlichen röhrenförmigen zylindrischen Körper (3) bewerkstelligt wird.

8. Herstellverfahren gemäss dem Anspruch 5,
**dadurch gekennzeichnet, dass**
die Polymerlösung, mit der die Verbindungsbrücken (Verfahrensschritt C) innen sowie aussen ausgekleidet werden, eine Lösung von Phenolharz in einem Lösungsmittel ist.

9. Herstellverfahren gemäss dem Anspruch 5,
**dadurch gekennzeichnet, dass**
die Polymerlösung, mit der die Verbindungsbrücken (Verfahrensschritt C) innen sowie aussen ausgekleidet werden, eine Lösung von prä-keramischem Polymer in einem Lösungsmittel ist.

10. Herstellverfahren gemäss dem Anspruch 5,
**dadurch gekennzeichnet, dass**
die Lösung (Verfahrensschritt C) eine Viskosität von weniger als 10 cP (Centipoise) aufweist.

11. Herstellverfahren gemäss dem Anspruch 5,
**dadurch gekennzeichnet, dass**
die Kunststofffäden, welche die Vorlage für das künftige Schaumkeramikmaterial bilden, aus Polyethylen, Polyester, Polyamid oder Polypropylen bestehen.
